(19) Europäisches Patentamt

European Patent Office

Office européen des brevets

(11) Veröffentlichungsnummer: **0 358 205 B1**

(12) **EUROPÄISCHE PATENTSCHRIFT**

(45) Veröffentlichungstag der Patentschrift: **01.12.93**

(21) Anmeldenummer: **89116484.0**

(22) Anmeldetag: **07.09.89**

(51) Int. Cl.⁵: **G05D 1/06**, G05D 1/08, G01P 5/00

(54) **Flugdatengeber.**

(30) Priorität: **09.09.88 DE 3830634**

(43) Veröffentlichungstag der Anmeldung:
**14.03.90 Patentblatt 90/11**

(45) Bekanntmachung des Hinweises auf die
Patenterteilung:
**01.12.93 Patentblatt 93/48**

(84) Benannte Vertragsstaaten:
**DE ES FR GB IT SE**

(56) Entgegenhaltungen:
**EP-A- 0 179 197**
**EP-A- 0 263 777**
**EP-A- 0 322 532**
**WO-A-88/10458**
**DE-A- 3 145 389**

**ZEITSCHRIFT FUR FLUGWISSENSCHAFTEN UND WELTRAUMFORSCHUNG. vol. 9, no. 6, 01 November 1985, KOLN DE Seiten 376 - 382; R.Brockhaus: "Ein Vorschlag für die Wahl der zustandsvariablen in der Bewegungsgleichungen von Flugzeugen unter Windeinfluss."**

(73) Patentinhaber: **Bodenseewerk Gerätetechnik GmbH**
**Alte Nussdorfer Strasse 15**
**Postfach 1120**
**D-88662 Überlingen(DE)**

(72) Erfinder: **Krogmann, Uwe**
**Zur Asche 24**
**D-7770 Überlingen Nussdorf(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast**
**Bökenbusch 41**
**Postfach 11 03 86**
**D-42531 Velbert (DE)**

## Beschreibung

Die Erfindung betrifft einen Flugdatengeber zur Erzeugung von Anstellwinkel-, Schiebewinkel und Fluggeschwindigkeitssignalen, enthaltend

(a) Flugdatensensoren, welche Sensorsignale nach Maßgabe des Anstellwinkels. des Schiebewinkels und der Fluggeschwindigkeit liefern,

(b) Koordinatentransformationsmittel, auf welche die Sensorsignale aufgeschaltet sind und durch welche die Fluggeschwindigkeit nach Maßgabe der Anstell- und Schiebewinkel als flugzeugbezogener Fluggeschwindigkeitsvektor in ein flugzeugfestes Koordinatensystem transformierbar ist,

(c) Mittel zur Bildung der Differenz eines inertial gewonnenen, auf ein flugzeugfestes Koordinatensystem bezogenen inertialen Geschwindigkeitsvektors und des flugzeugbezogenen Fluggeschwindigkeitsvektors als flugzeugbezogener Windvektor, und

(d) Mittel zur Bildung der Differenz des inertialen Geschwindigkeitsvektors und des Windvektors zur Bildung eines Schätzwertes des flugzeugbezogenen Fluggeschwindigkeitsvektors und

(e) Mittel zur Erzeugung von Signalen, welche Schätzwerte des Anstellwinkels und des Schiebewinkels darstellen, aus dem Schätzwert des flugzeugbezogenen Fluggeschwindigkeitsvektors.

## Zugrundeliegender Stand der Technik

Durch die EP-A2-0 263 777 ist ein Flugdatengeber bekannt, der dazu dient, bei Ausfall von Flugdatensensoren für eine gewisse Zeit noch Schätzwerte für die Flugdaten Fluggeschwindigkeit (True Airspeed), Anstellwinkel und Schiebewinkel zu liefern.

Diese Flugdaten sind auf den Flugregler des Flugzeugs aufgeschaltet und für die Funktion des Flugreglers zur Stabilisierung des Flugzeuges wesentlich. Ein Ausfall von Flugdatensensoren ist daher ganz besonders kritisch bei Flugzeugen geringer Eigenstabilität, für welche das Funktionieren des Flugreglers lebenswichtig ist. Trägheitssensoren wie Kreisel und Beschleunigungsmesser sind aus diesem Grunde redundant vorgesehen, so daß bei Ausfall eines Trägheitssensors andere Trägheitssensoren die Funktion aufrechterhalten. Einer ausreichenden Vermehrfachung von Flugdatensensoren sind jedoch häufig aus geometrischen Gründen Grenzen gesetzt, so daß der geforderte Sicherheitsgrad auf diese Weise oft nicht erreichbar ist.

Ein weiteres Problem ergibt sich daraus, daß die Signale der Flugdatensensoren stark verrauscht sind und durch das Strömungsverhalten bei bestimmten Flugmanövern auch kurzzeitig ausfallen können. Solche Signale lassen sich in dem Flugregler schlecht verarbeiten.

In dem Flugzeug ist eine aus Beschleunigungsmessern und Kreiseln aufgebaute, hochzuverlässige Inertialmeßeinheit (IMU) vorgesehen, die Fluglagewinkel und auch eine inertial gemessene Geschwindigkeit liefert, also die Lage und Geschwindigkeit des Flugzeugs gegenüber dem inertialen Raum. Durch Vermehrfachung der Sensoren hat diese Inertialmeßeinheit den erforderlichen Grad von Zuverlässigkeit und Fehlertoleranz. Weiterhin ist in dem Flugzeug eine hochgenaue Trägheitsnavigationsanlage (INS) vorgesehen, die ebenfalls eine inertiale Geschwindigkeit liefert.

Nach der EP-A2-0263 777 wird die Inertialmeßeinheit benutzt, um bei einem Ausfall eines Flugdatensensors für eine begrenzte Zeit, die zur Landung ausreichen kann, Schätzwerte für die Flugdaten zu gewinnen. Zu diesem Zweck wird laufend anhand der gemessenen Anstell- und Schiebewinkel die Fluggeschwindigkeit (True Airspeed) in ein flugzeugfestes Koordinatensystem transformiert. Es wird so ein flugzeugbezogener Fluggeschwindigkeitsvektor erhalten. Aus dem inertialen Geschwindigkeitsvektor der Inertialmeßeinheit und dem inertialen Geschwindigkeitsvektor der Trägheitsnavigationsanlage (INS) wird durch ein Optimalfilter ein Schätzwert für den inertialen Geschwindigkeitsvektor gewonnen, der durch eine Koordinatentransformation ebenfalls in ein flugzeugfestes Koordinatensystem transformiert wird. Aus der Differenz des flugzeugbezogenen Fluggeschwindigkeitsvektors und des inertialen Geschwindigkeitsvektors wird ein Windvektor gebildet und laufend auf ein Register gegeben. Aus diesem Windvektor und dem Schätzwert des inertialen Geschwindigkeitsvektors werden die Schätzwerte für Anstell- und Schiebewinkel und für die Fluggeschwindigkeit gewonnen. Im Normalbetrieb werden diese Schätzwerte zur Überprüfung des beschriebenen Kreises verwendet. Dadurch wird sichergestellt, daß in dem Register tatsächlich ständig der Vektor der Windgeschwindigkeit gespeichert ist.

Bei Ausfall eines Flugdatensensors werden die zuletzt vor dem Ausfall in das Register eingelesenen Komponenten des Windvektors festgehalten. Der Flugregler wird von den Schätzwerten der Flugdaten beaufschlagt. Es wird dabei angenommen, daß sich der Windvektor während dieses "Notbetriebes" nicht ändert.

## Offenbarung der Erfindung

Der Erfindung liegt die Aufgabe zugrunde, bei einem Flugdatengeber der eingangs definierten Art Änderungen des Windvektors in Rechnung zu stellen.

Der Erfindung liegt weiter die Aufgabe zugrunde, dem Flugregler im Normalbetrieb oder im Notbetrieb wenig verrauschte, ständig ohne Unterbrechungen verfügbare Flugdaten zur Verfügung zu stellen.

Erfindungsgemäß wird diese Aufgabe dadurch gelöst, daß

(f) der Windvektor auf ein Filter aufgeschaltet ist, das ein Markov - Modell erster Ordnung darstellt zur Erzeugung eines Schätzwertes des Windvektors.

Ein Markov - Modell bestimmt die zeitlichen Änderungen einer stochastischen Größe, hier der Komponenten des Windvektors, aus den in einem bestimmten Zeitpunkt vorliegenden Werten der Größe. Parameter dieses Modells werden empirisch bestimmt. Durch das Filter wird im Normalbetrieb ein Schätzwert des Windvektors mit geringem Rauschen und ohne Unterbrechungen geliefert, der den Flugregler zur Stabilisierung des Flugzeugs beaufschlagt.

Eine bevorzugte Ausführung der Erfindung besteht darin, daß

(a) eine Vorrichtung zur Kontrolle der Flugdatensensoren auf Verfügbarkeit und Gültigkeit vorgesehen ist, welche bei einer Störung von Flugdatensensoren ein Steuersignal liefert, und

(b) das Steuersignal auf das Markov - Filter aufgeschaltet ist zum Festhalten der letzten Werte des Windvektors vor der Störung der Flugdatensensoren, so daß das Markov - Filter mit diesen festgehaltenen Werten als Eingangswerten weiterarbeitet.

Bei Ausfall von Flugdatensensoren wird der dann vorliegende Windvektor festgehalten. Das ein Markov - Modell darstellende Filter arbeitet ausgehend von diesem festgehaltenen Windvektor zur laufenden weiteren Bestimmung von Schätzwerten des Windvektors. Mit diesen so erhaltenen Schätzwerten und dem von der Inertialmeßeinheit gelieferten inertialen Geschwindigkeitsvektor werden die Schätzwerte für die Flugdaten gewonnen. Auf diese Weise werden Änderungen des Windvektors wenigstens in einem Modell berücksichtigt.

Ein Ausführungsbeispiel der Erfindung ist nachstehend unter Bezugnahme auf die zugehörige Zeichnung näher erläutert.

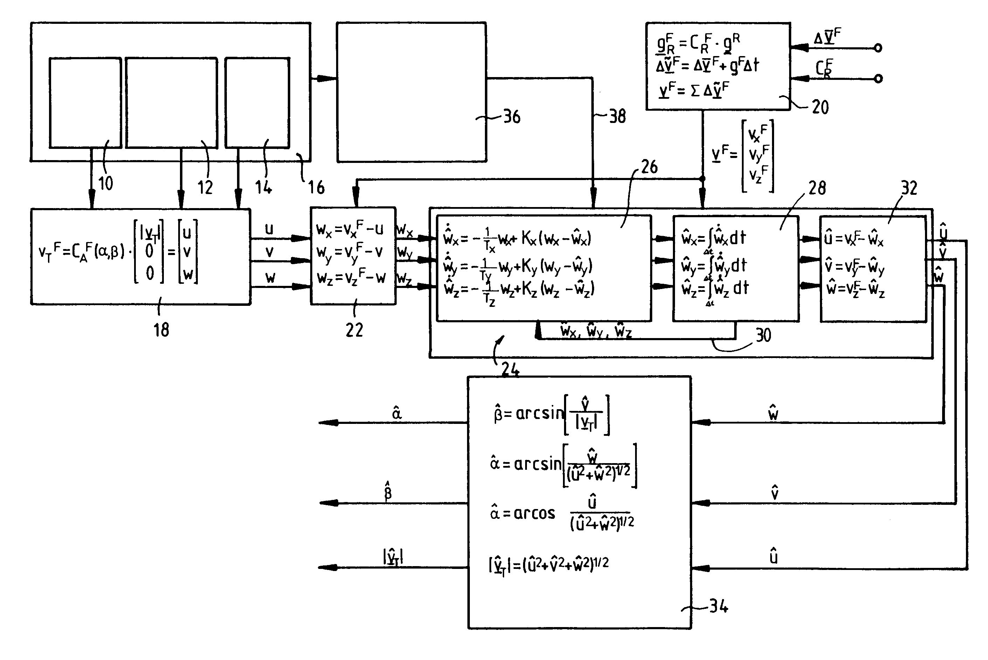

## Kurze Beschreibung der Zeichnung

Die Zeichnung ist ein Blockdiagramm eines Flugdatengebers mit einem ein Markov - Modell erster Ordnung darstellenden Filter zur Erzeugung von rauscharmen, ununterbrochenen Schätzwerten der Flugdaten, wobei das Filter bei Ausfall von Flugdatensensoren unter Berücksichtigung des zuletzt vor diesem Ausfall gemessenen, festgehaltenen Windvektors Schätzwerte für den Windvektor liefert, die mit einem inertialen Geschwindigkeitsvektor zur Bestimmung des Fluggeschwindigkeitsvektors kombiniert wird.

## Bevorzugte Ausführung der Erfindung

In der Figur ist mit 10 ein Fluggeschwindigkeitssensor bezeichnet, der ein dem Absolutbetrag der Fluggeschwindigkeit entsprechendes Signal liefert. Ein Anstellwinkelsensor 12 liefert ein den Anstellwinkel $\alpha$ des Flugzeugs wiedergebendes Signal. Ein Schiebewinkelsensor 14 liefert ein den Schiebewinkel $\beta$ wiedergebendes Signal. Der Fluggeschwindigkeitssensor 10, der Anstellwinkelsensor 12 und der Schiebewinkelsensor 14, die ggf. vermehrfacht vorgesehen sind, bilden zusammen mit den zugehörigen Signalaufbereitungsmitteln die Flugdatensensor 16, der in der Figur als Block dargestellt ist. Die Signale von dem Flugdatensensor werden einer Koordinatentransformation unterworfen, wie durch Block 18 dargestellt ist. Dabei wird die Fluggeschwindigkeit (True Airspeed) nach Maßgabe von Anstellwinkel $\alpha$ und Schiebewinkel $\beta$ in ein flugzeugfestes Koordinatensystem transformiert. Es wird so ein flugzeugbezogener Fluggeschwindigkeitsvektor $v_T^F$ mit den Komponenten u,v und w erhalten. Eine Inertialmeßeinheit 20, die nach Art der EP-A2-0263 777 ausgebildet sein kann, liefert einen inertialen Geschwindigkeitsvektor, der die Geschwindigkeit des Flugzeuges gegenüber dem inertialen Raum bezogen auf ein flugzeugfestes Koordinatensysten wiedergibt. Dieser inertiale Geschwindigkeitsvektor ist mit $v^F$ bezeichnet. Zur Bildung des Windvektors mit den Komponenten $w_x, w_y$ und $w_z$ wird die Differenz des flugzeugbezogenen Fluggeschwindigkeitsvektors und des inertialen Geschwindigkeitsvektors gebildet. Das ist durch Block 22 dargestellt. Der so erhaltene Windvektor ist auf ein Filter 24 geschaltet, das ein Markov - Modell erster Ordnung darstellt. Wie durch Block 26 dargestellt ist, werden Schätzwerte für die Zeitableitungen der Komponenten des Windvektors nach folgender Beziehung gebildet:

$$\dot{\hat{w}}_x = -\frac{1}{T_x} w_x + K_x (w_x - \hat{w}_x)$$

$$\dot{\hat{w}}_y = -\frac{1}{T_y} w_y + K_y (w_y - \hat{w}_y)$$

$$\dot{\hat{w}}_z = -\frac{1}{T_z} w_z + K_z (w_z - \hat{w}_z)$$

Darin sind $T_x, T_y$ und $T_z$ Zeitkonstanten und $k_x, k_y$ und $k_z$ Korrekturfaktoren, die empirisch bestimmt werden.

Die so erhaltenen Zeitableitungen werden, wie durch Block 28 dargestellt ist, zeitlich integriert und liefern Schätzwerte für die Komponenten des Windvektors. Diese Schätzwerte werden wieder auf Block 26 zurückgeführt, wie durch die Verbindung 30 dargestellt ist.

Der so erhaltene Schätzwert für den Windvektor wird von dem inertialen Geschwindigkeitsvektor subtrahiert, wie durch Block 32 dargestellt ist. Es werden dadurch Schätzwerte u,v und w für die Komponenten des flugzeugbezogenen Fluggeschwindigkeitsvektors erhalten. Aus diesen Komponenten werden gemäß Block 34 Signale erzeugt, welche Schätzwerte $\hat{\alpha}$, $\hat{\beta}$ und $|\hat{v}_T|$ und für Anstellwinkel, Schiebewinkel und Fluggeschwindigkeit liefern. Die Bildung dieser Schätzwerte erfolgt nach folgenden Beziehungen:

$$\hat{\beta} = \arcsin\left[\frac{\hat{v}}{|\underline{v}_T|}\right]$$

$$\hat{\alpha} = \arcsin\left[\frac{\hat{w}}{(\hat{u}^2 + \hat{w}^2)^{1/2}}\right]$$

oder

$$\hat{\alpha} = \arccos\frac{\hat{u}}{(\hat{u}^2 + \hat{w}^2)^{1/2}}$$

$$|\hat{\underline{v}}_T| = (\hat{u}^2 + \hat{v}^2 + \hat{w}^2)^{1/2}$$

Block 34 beinhaltet auch eine Quadrantenlogik, welche bestimmt, nach welcher der beiden angegebenen Beziehungen der Schätzwert des Anstellwinkels gebildet wird.

Diese Signale können auch im Normalbetrieb auf den Flugregler geschaltet sein. Sie sind weniger verrauscht als die Originalsignale der Flugdatensensoren und sind ständig ohne Unterbrechungen verfügbar. Wenn die Flugdatensensoren 16 ausfallen, dann wird das von einer Vorrichtung 36 zur Kontrolle der Verfügbarkeit und Gültigkeit der Flugdaten festgestellt. Die Vorrichtung 36 gibt bei Ausfall der Flugdatensensoren 16 ein Signal an das Filter 24, wie durch Line 38 dargestellt ist. Durch dieses Signal werden die zum Zeitpunkt des Ausfalles auf das Filter 24 aufgeschalteten Komponenten $w_x, w_y$ und $w_z$ des Windvektors festgehalten. Das Filter 24 arbeitet weiterhin mit diesen festgehaltenen Komponenten und liefert nach dem Markov - Modell Schätzwerte $\hat{w}_x, \hat{w}_y$ und $\hat{w}_z$ für die Komponenten des Windvektors. Diese werden in der beschriebenen Weise weiterverarbeitet und liefern Schätzwerte für die Flugdaten, die weiterhin auf den Flugregler gegeben werden können.

Damit bleibt der Flugdatengeber auch nach Ausfall der Flugdatensensoren noch für eine Zeit in Betrieb, die in vielen Fällen ausreicht, das Flugzeug noch zu landen.

Im Gegensatz zu der EP-A2-0 263 777 wird bei dem vorliegenden Flugdatengeber der inertiale Geschwindigkeitsvektor ausschließlich von einer Inertialmeßeinheit geliefert, also ohne Benutzung eines Meßwertes der Trägheitsnavigationsanlage.

**Patentansprüche**

1. Flugdatengeber zur Erzeugung von Anstellwinkel, Schiebewinkel und Fluggeschwindigkeitssignalen, enthaltend

    (a) Flugdatensensoren (16), welche Sensorsignale nach Maßgabe des Anstellwinkels. des Schiebewinkels und der Fluggeschwindigkeit liefern,

    (b) Koordinatentransformationsmittel (18), auf welche die Sensorsignale aufgeschaltet sind und durch welche die Fluggeschwindigkeit nach Maßgabe der Anstell- und Schiebewinkel als flugzeugbezogener Fluggeschwindigkeitsvektor in ein flugzeugfestes Koordinatensystem transformierbar ist,

    (c) Mittel (22) zur Bildung der Differenz eines inertial gewonnenen, auf ein flugzeugfestes Koordinatensystem bezogenen inertialen Geschwindigkeitsvektors und des flugzeugbezogenen Fluggeschwindigkeitsvektors als flugzeugbezogener Windvektor, und

    (d) Mittel (32) zur Bildung der Differenz des inertialen Geschwindigkeitsvektors und des Windvektors zur Bildung eines Schätzwertes des flugzeugbezogenen Fluggeschwindigkeitsvektors und

    (e) Mittel (34) zur Erzeugung von Signalen, welche Schätzwerte des Anstellwinkels und des Schiebewinkels darstellen, aus dem Schätzwert des flugzeugbezogenen Fluggeschwindigkeitsvektors.

    **dadurch gekennzeichnet, daß**

    (f) der Windvektor auf ein Filter (24) aufgeschaltet ist, das ein Markov - Modell erster Ordnung darstellt zur Erzeugung eines Schätzwertes des Windvektors.

2. Flugdatengeber nach Anspruch 1, **dadurch gekennzeichnet, daß**

    (a) eine Vorrichtung (36) zur Kontrolle der Flugdatensensoren (16) auf Verfügbarkeit und Gültigkeit vorgesehen ist, welche bei einer Störung von Flugdatensensoren (16) ein Steuersignal liefert, und

(b) das Steuersignal auf das Markov Filter (24) aufgeschaltet ist zum Festhalten der letzten Werte des Windvektors vor der Störung der Flugdatensensoren (16), so daß das Markov Filter (24) mit diesen festgehaltenen Werten als Eingangswerten weiterarbeitet.

3. Flugdatengeber nach Anspruch 1 oder 2, **dadurch gekennzeichnet, daß** der inertiale Geschwindigkeitsvektor ausschließlich von einer Inertialmeßeinheit (20) geliefert wird.

**Claims**

1. Air data generator for generating angle of attack, angle of yaw and airspeed signals comprising

(a) air data sensors (16), which provide sensor signals idicative of the angle of attack, of the angle of yaw and of the airspeed,

(b) coordinate transformationmeans (18), to which the sensor signals are applied and which are arranged to transform the airspeed into an aircraft-fixed coordinate system, in accordance with the angle of attack and the angle of yaw, as an aircraft-referenced airspeed vector,

(c) means (22) for forming the difference of an inertially obtained inertial speed vector referenced to an aircraft-fixed coordinate system and of the aircraft-referenced airspeed vector as aircraft-referenced wind vector,

(d) means (32) for forming the difference of the inertial speed vector and of the wind vector to provide an estimated value of the aircraft-referenced airspeed vector, and

(e) means (34) for generating signals, which represent estimated values of the angle of attack and of the angle of yaw, from the estimated value of the aircraft-referenced airspeed vector,

**characterized in that**

(f) the wind vector is applied to a filter (24), which represents a first order Markov model, for generating an estimated value of the wind vector.

2. Airspeed generator as claimed in claim 1, **characterized in that**

(a) a device (22) for monitoring the airdata sensors (16) with respect to availability and validity is provided, which device provides a control signal in the case of a failure, and

(b) the control signal is applied to the Markov filter (24) to hold the last values of the wind vector prior to the failure of the air data sensors (16), so that the Markov filter continues to operate with these held values as input values.

3. Air data generator as claimed in claim 1 or 2, **characterized in that** the inertial speed vector is provided exclusively by an inertial measuring unit (20).

**Revendications**

1. Capteur de données de vol destiné à former des angles d'incidence, des angles de dérapage et des signaux de la vitesse de vol, comprenant

(a) des détecteurs de données de vol (16) fournissant des signaux de détecteur selon l'angle d'incidence, l'angle de dérapage et la vitesse de vol,

(b) des moyens de transformation de coordonnées (18) auxquels sont appliqués les signaux de détecteur et par lesquels la vitesse de vol est susceptible d'être transformée selon l'angle d'incidence et de dérapage comme vecteur de vitesse de vol dans un système des coordonnées stationnaire par rapport à l'avion,

(c) des moyens (22) destinés à former la différence entre un vecteur de vitesse de vol interielle rapporté à un système des coordonnées stationnaire par rapport à l'avion et un vecteur de vitesse de vol rapporté à l'avion comme vecteur de vent rapporté à l'avion, et

(d) des moyens destinés à former la différence entre le vecteur de vitesse inertielle et le vecteur de vent afin de former une valeur estimative du vecteur de vitesse de vol rapporté à l'avion, et

(e) des moyens destinés à former des signaux représentant des valeurs estimatives de l'angle d'incidence et de l'angle de dérapage, à partir de la valeur estimative du vecteur de vitesse de vol rapporté à l'avion,

**caractérisé par le fait que**

(f) le vecteur de vent est appliqué à un filtre (24) représentant un modèle Markov de première ordre afin d'engendrer une valeur estimative du vecteur de vent.

2. Capteur de données de vol selon la revendication 1, **caractérisé par le fait que**

(a) un dispositif (36) destiné à contrôler les détecteurs de données de vol (16) en vue de la disponibilité et la validité, et qui fournit un signal de commande dans le cas d'une perturbation de détecteurs de données de vol,

(b) le signal de commande est appliqué au filtre Markov (24) afin de retenir la dernière valeur du vecteur de vent avant la perturbation des détecteurs de donnés de vol (16) de sorte que le filtre Markov (24) continue à fonctionner avec ces valeurs retenues comme valeurs d'entrée.

3. Capteur de données de vol selon la revendication 1 ou 2, **caractérisé par le fait que** le vecteur de vitesse inertielle est uniquement fourni par une unité de mesure inertielle (20).